Europäisches Patentamt

European Patent Office

Office européen des brevets

(11) Publication number: **0 403 217**
**A1**

# EUROPEAN PATENT APPLICATION

(21) Application number: **90306373.3**

(22) Date of filing: **12.06.90**

(51) Int. Cl.5: **A21C 3/06, A21C 3/08**

(30) Priority: **12.06.89 JP 68334/89 U**

(43) Date of publication of application:
**19.12.90 Bulletin 90/51**

(84) Designated Contracting States:
**AT BE CH DE ES FR GB IT LI NL SE**

(71) Applicant: **RHEON AUTOMATIC MACHINERY CO. LTD.**
**2-3, Nozawa-machi**
**Utsunomiya-shi Tochigi-ken(JP)**

(72) Inventor: **Saito, Akio**
**2-3 Nozawa-machi**
**Utsunomiya-shi, Tochigi-ken(JP)**
Inventor: **Yamanaka, Hideo**
**2-3 Nozawa-machi**
**Utsunomiya-shi, Tochigi-ken(JP)**

(74) Representative: **Tomlinson, Kerry John et al**
**Frank B. Dehn & Co. European Patent**
**Attorneys Imperial House 15-19 Kingsway**
**London WC2B 6UZ(GB)**

(54) A dough-twisting machine.

(57) A dough twisting machine is provided having a simple structure comprising a curved endless conveyor (10), a fan-shaped plate (16) located above and spaced apart from the curved endless conveyor, a supporting member (18) for supporting the fan-shaped plate, and a frame (24a,24b) for supporting the supporting member and the endless curved conveyor. Dough pieces (8) are conveyed into the clearance (c) between the curved endless conveyor and the fan-shaped plate and are uniformly twisted from end to end while they pass through the clearance.

# F I G. I

# A DOUGH-TWISTING MACHINE

This invention relates to the continuous production of bread and pastries, and, more particularly, to the continuous production of twisted products shaped by twisting bar-shaped dough pieces.

One of the conventional dough-twisting machines is disclosed in U.S. Patent No. 3,038,418. This machine has a linear endless conveyor having a support surface, a narrow endless holding belt run at the same speed as that of the endless conveyor, and a narrow endless twisting belt run at a faster speed than that of the endless conveyor, the holding belt and the twisting belt being arranged side by side and spaced apart from each other, and located above and spaced apart from the support surface of the linear endless conveyor so that a dough piece is received between the support surface of the linear endless conveyor and the holding belt and the twisting belt. Because of the difference in the speed of the holding belt and the twisting belt the dough piece is twisted.

According to this machine, the portion of the dough piece between the holding belt and the twisting belt cannot be uniformly twisted due to the plasticity of the dough material. This is particularly so when the dough material is not homogeneous. The portion of the dough gripped between the holding belt and the endless conveyor is not twisted at all.

The twisting belt is narrow and exerts pressure on only a small part of the surface of each bar-shaped dough piece that is in contact with the twisting belt, so that the pressure applied by the belt is not sufficient to twist the relatively long portion of the dough piece where no pressure is applied.

In addition, to twist a long dough piece, since the twisting belt and the holding belt are widely spaced apart, an additional and second short twisting belt must be used between the holding belt and the first twisting belt. When the dough piece is long, the first portion of the dough, which lies between the holding belt and the second twisting belt, is first twisted, and then the second portion of the dough, which lies between the second twisting belt and the first twisting belt, is twisted.

However, the relatively long portions of the dough lying between the holding belt and the second twisting belt, and between the second twisting belt and the first twisting belt, cannot be successfully and uniformly twisted, since the dough is plastic and such portions do not receive pressure. In this case the portion of the dough gripped between the holding belt and the endless conveyor is also not twisted at all. The provision of the second twisting belt makes the machine complex.

In addition, in the prior art apparatus described above, the endless conveyor, the holding belt, and the twisting belts, are all located linearly. Thus this machine cannot freely change the dough conveying direction in line with the factory layout, unless additional devices are provided.

An attempt has also been made in which many endless belts are arranged in a direction transverse to the conveyor belt, so as to increase the contact area and to thereby enhance the twisting effect.

In spite of such an attempt, uniformly twisted products have still not been obtained, because the twisting effect is not fully and uniformly imparted to all the portions of the bar-shaped dough piece.

Thus, the prior art apparatus has had a limitation in its capability to shape bar-shaped dough pieces into completely and uniformly twisted products. Therefore, there has been a strong demand to develop an apparatus which can continuously shape bar-shaped dough pieces into twisted products while solving all of the prior art problems.

This invention is distinguished from the prior art in that different means are used for the purpose. This invention provides a dough twisting machine comprising an endless conveyor formed to follow a curved path such that radially outer portions of the conveyor run at higher speed than radially inner portions, and a plate mounted above and spaced apart from the conveyor and generally parallel thereto, whereby dough products introduced into the clearance between the conveyor and the plate so as to be conveyed in contact with the conveyor and plate receive a uniform twist.

According to the present invention, by using the curved endless conveyor and the overlying plate, dough pieces of any length and thickness can be completely and uniformly twisted.

In the present invention a continuous sheet of dough is cut into bar-shaped dough pieces. They are placed on an inlet conveyor in a transverse orientation and are passed through the clearance between the curved endless conveyor and a fan-shaped plate so as to impart a twist to them.

By adjusting the clearance between the curved endless conveyor and the fan-shaped plate smaller than the thickness of the dough pieces, the dough pieces passing through this clearance will receive vertical pressure from above and below.

The dough pieces are uniformly and completely twisted due to the difference in the speed between the radial inner periphery and the outer periphery of the curved endless conveyor. More specifically, the distance of the outer radial periphery is longer than that of the inner radial periphery of the curved endless conveyor, and since only the outer periphery of the conveyor is driven by a driving mechanism, the outer periphery moves faster than the inner periphery. The conveyor belt moves as above over rollers located inside of the conveyor belt at the upstream and the downstream sides, as more specifically explained below.

Certain embodiments of the invention will now be described by way of example and with reference to the accompanying drawings.

Brief Description of the Drawings

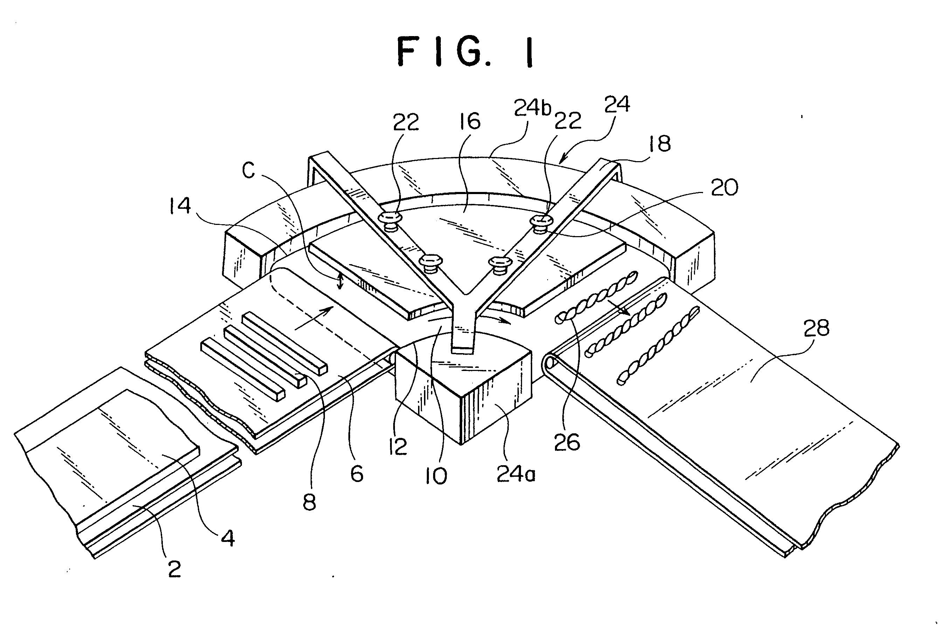

Fig. 1 is a perspective view of a first embodiment of the present invention.

Fig. 2 is a partial plan view of a second embodiment of the present invention.

Fig. 3 is a perspective view of a third embodiment of the present invention.

Description of the Preferred Embodiments

Embodiments of this invention will now be described.

Fig .1 shows a first embodiment of the present invention.

In this embodiment a dough sheet 4 is conveyed by a first conveyor 2 and is cut into bar-shaped dough pieces 8 by a cutting device (not shown) and the dough pieces are conveyed onto an inlet conveyor 6. The dough pieces 8 are then transferred to a curved endless conveyor 10. The curved endless conveyor 10, which is in the form of a quadrant, and is contiguous to the downstream side of the inlet conveyor 6.

A fan-shaped plate 16 is mounted to a supporting member, namely, arms 18, above the curved conveyor 10, so that clearance C is present between the conveyor 10 and the plate 16. The curved endless conveyor and the fan-shaped plate constitute a dough twisting station.

The clearance C, namely, the height of the fan-shaped plate, can be adjusted by height adjusting means 20 having handles 22, each consisting of a knob and a bolt inserted through threaded through holes in the arms 18, and the lower end of the bolt is fixed to the fan-shaped plate 16. By turning the handles 22, the plate 16 can be raised or lowered.

A frame 24 having an inner frame portion 24a and an outer frame portion 24b is provided. The frame 24 supports the arms 18 and the endless curved conveyor 10.

The structure, and its driving mechanism, of the curved endless conveyor 10 will now be explained.

The curved endless conveyor 10 has a uniformly curved run. Rollers are rotatably mounted via shafts to the frame 24 at the upstream and the downstream sides of the curved endless conveyor. Namely, one end of each of the shafts is journaled to the inner portion 24a of the frame 24, and each of the other ends of the shafts is journaled to the outer portion 24b of the frame. On these rollers a curved endless conveyor belt is entrained. The belt is formed so as to conform to the curved endless conveyor 10. A sprocket is fixed to each of the shafts adjacent to the outer frame portion 24b, and a curved endless chain is entrained around the sprockets so as to extend and move along the curved outer periphery of the conveyor belt. A plurality of springs are used to connect the outer periphery of the conveyor belt to the curved endless chain. The chain moves along a curved path of the outer periphery of the curved conveyor guided by appropriate guide means. A conveyor drive motor is mounted to the frame 24 below the conveyor belt and a drive chain is entrained around the drive shaft of the motor and another sprocket fixed to one of the roller shafts. As is apparent, when the motor is driven, the endless chain is moved to advance the outer periphery of the conveyor belt at a speed faster than that of the inner periphery. The above is only an example of the curved endless conveyor 10, and there can be many varieties. For example, the upstream and downstream rollers may be of such a form that the diameter constantly increases from the inner end to the outer end at a rate proportionate to the length of the run of the conveyor belt at its outer periphery over its inner periphery.

In operation, the clearance C is first adjusted so that the height of the fan-shaped plate 16 is made to be less than the thickness of the dough piece 8. The dough piece carried by the inlet conveyor 6 is received between the curved endless conveyor 10 and the fan-shaped plate 16.

The dough piece thus received in the clearance C will be uniformly and completely twisted in its entirety while it moves through the clearance between the curved endless conveyor 10 and fan-shaped plate 16 due to the difference in speed between the radial inner periphery 12 and the outer radial periphery 14 of the curved endless conveyor.

For instance, if a quadrant having a radius of 15cm, with its inner radial periphery at a distance of 5cm from the center of the circle, is used, the inner radial periphery 12 advances about 8cm, the outer periphery 14 advances about 24cm, as apparent from the following calculations.
Inner Periphery: (5 + 5)x3.14÷4 = 7.85
Outer Periphery: (15 + 15)x3.14÷4 = 23.5

If fine ridges or undulations are provided on the lower surface of the fan-shaped plate 16, the frictional resistance of the fan-shaped plate against the dough pieces will increase.

As was already mentioned, when, in the arrangement described above, the bar-shaped dough pieces 8 are conveyed and passed through the clearance C, they are entirely and uniformly twisted.

The twisted products 26 are then tranferred onto the outlet conveyor 28.

The curved endless conveyor acts to change the conveying direction by an angle of about 90 degrees, in this first embodiment.

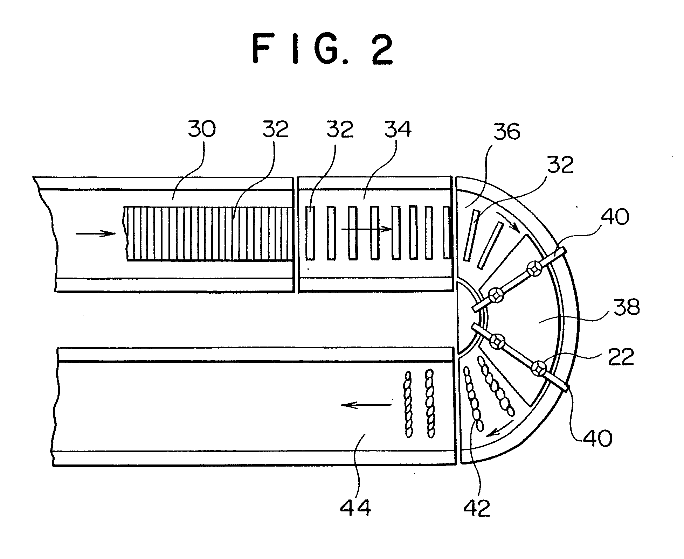

Fig. 2 shows a second embodiment of this invention.

In this embodiment the bar-like dough pieces 32 are conveyed onto an inlet conveyor 34 from a second, conveyor 30. Instead of the curved conveyor 10 of the quadrant type used in the first embodiment, a semicircular curved conveyor 36 is used. The driving mechanism of the curved endless conveyor 36 is substantially the same as that of the conveyor 10 of the first embodiment. Since the angular extent of the conveyor 36 is about 180 degrees, as opposed to 90 degrees in the first embodiment, the fan-shaped plate 38 in this case occupies part of the conveyor. Of course a fan-shaped plate having the same angular extent as that of the 180 degree conveyor 36 can be used, if desired.

The dough pieces 32 are conveyed onto the curved conveyor 36 radially of the upper reach of the conveyor and carried toward the fan-shaped plate 38 without being rolled. The distance between the outer ends of the adjacent dough pieces becomes greater than that of the adjacent inner ends thereof, due to the difference in speed between the outer periphery and the inner periphery of the curved conveyor, as was previously explained.

The dough pieces then enter the clearance between the curved conveyor and the fan-shaped plate. The twisted products 42 are discharged from the curved conveyor to an outlet conveyor 44. The reference numbers 40 show arms mounted to the frame and supporting the fan-shaped plate 38. The frame also supports the endless curved conveyor 36.

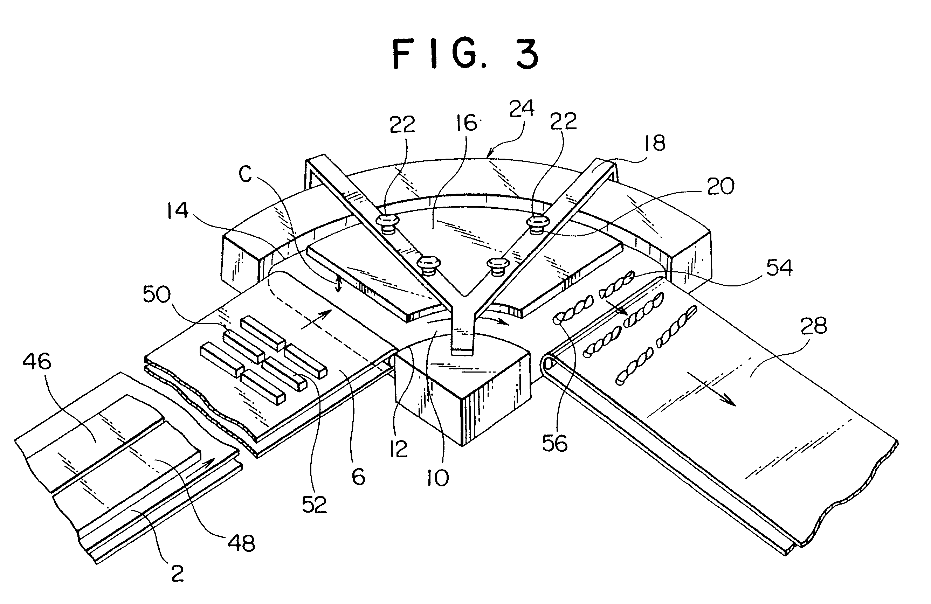

Fig. 3 shows a third embodiment of the present invention.

As is apparent from the drawing, divided dough sheets 46, 48 are prepared to form two rows of bar-shaped dough pieces 50, 52. Twisted products are shown by numbers 54, 56.

Regarding the angular extent of the curved endless conveyors, in the first and third embodiments quadrant-type curved conveyors are shown, while in the second embodiment a semicircular curved conveyor is shown.

However, the angular extent of the curved conveyor is not limited to only such types. Namely, the angular extent can optionally be determined within the extent of a semicircle of about 180 degrees, depending on the layout of the factory, thus bringing about the advantage of changing the dough conveying directions without using any additional device.

As described above, according to the prior art dough twisting machine, dough pieces were contacted by two or three endless belts, namely, one holding belt and one or two twisting belts. Thus the relatively long portions of the dough pieces that are not contacted by the twisting belts cannot be uniformly twisted due to the plasticity of the dough material. Further, the portion of the dough held between the holding belt and the conveyor cannot be twisted at all. These disadvantages derive from the technical concept of using narrow belts to twist plastic doughs.

In contrast to such a structure, according to this invention, dough pieces can be completely and uniformly twisted by using a curved endless conveyor and a fan-shaped plate positioned above and spaced apart from the curved endless conveyor. The dough pieces are conveyed into the clearance between the curved endless conveyor and the fan-shaped plate and are uniformly twisted from end to end as they pass through the clearance.

By using such a structure, the disadvantages of the prior art machine have successfully been overcome.

In addition, by using the curved conveyor of a different arcuate distance, the dough conveying direction can easily be changed depending on a factory's space requirements.

## Claims

1. A dough twisting machine comprising an endless conveyor formed to follow a curved path such that radially outer portions of the conveyor run at higher speed than radially inner portions, and a plate mounted above and spaced apart from the conveyor and generally parallel thereto, whereby dough products introduced into the clearance between the conveyor and the plate so as to be conveyed in contact with the conveyor and plate receive a uniform twist.

2. A machine as claimed in claim 1 wherein the plate is adjustably mounted above the conveyor so that said clearance therebetween may be adjusted.

3. A machine as claimed in claim 1 or 2 wherein said plate is arcuate and generally overlies the curved part of the conveyor.

4. A machine as claimed in claim 1, 2 or 3 wherein the conveyor is supported by a frame which also carries a supporting member, the plate being mounted on the supporting member.

5. A machine as claimed in any preceding claim wherein the plate is provided on its under surface with ridges or undulations whereby to increase the resistance to movement of the dough products moving in contact therewith.

6. A machine as claimed in any preceding claim further comprising an inlet conveyor located at the upstream side of the curved endless conveyor and an outlet conveyor located at the downstream side of the curved endless conveyor.

7. A machine as claimed in any preceding claim having means for delivering to said curved conveyor elongate dough pieces oriented transversely to the direction of travel of the conveyor whereby the pieces receive a uniform twist from end to end.

# F I G. I

EP 0 403 217 A1

# FIG. 2

EP 0 403 217 A1

FIG. 3

European Patent Office

# EUROPEAN SEARCH REPORT

Application Number

EP 90 30 6373

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | GB-A-946705 (CLEVELAND AUTOMATIC MACHINE CO.) <br> * the whole document * <br> --- | 1-7 | A21C3/06 <br> A21C3/08 |
| Y | US-E-21425 (C.C. GULDBECH) <br> * the whole document * <br> --- | 1-7 | |
| A | US-A-3354843 (C. VELAZQUEZ) <br> * figures * <br> ----- | 1-4 | |

TECHNICAL FIELDS SEARCHED (Int. Cl.5)

A21C

The present search report has been drawn up for all claims

| Place of search | Date of completion of the search | Examiner |
|---|---|---|
| THE HAGUE | 07 SEPTEMBER 1990 | FRANKS N.M. |

EPO FORM 1503 03.82 (P0401)